# EUROPÄISCHE PATENTSCHRIFT

(11) **EP 0 741 155 B1**
(45) Veröffentlichungstag und Bekanntmachung des Hinweises auf die Patenterteilung: **11.06.2003**
(21) Anmeldenummer: 96106519.0
(22) Anmeldetag: 25.04.1996
(51) Int. Cl.: C08G 18/62, C08G 18/80, C09D 129/14

(54) **Anionisch stabilisierte, wässrige Polyvinylbutyraldispersionen, Verfahren zu ihrer Herstellung und ihre Anwendung**
Anionically stabilized aqueous polyvinyl butyral dispersions, process for their production and use thereof
Dispersions aqueuses de polyvinylbutyral stabilisées par des groupes anioniques, procédé de leur préparation et leur utilisation

(30) Priorität: 02.05.1995 DE 19515967
(43) Veröffentlichungstag der Anmeldung: 06.11.1996
(73) Patentinhaber: Solutia Germany GmbH & Co. KG, 55252 Mainz-Kastel (DE)
(72) Erfinder: Merten, Gerhard, 65205 Wiesbaden (DE); Schäfer, Ralph, 65205 Wiesbaden (DE); Schafheutle, Markus, Dr., 8044 Graz (AT); Gerlitz, Martin, Dr., 8055 Graz (AT)

(56) Entgegenhaltungen:
- EP-A- 0 638 606
- GB-A- 1 154 819

## Beschreibung

Wäßrige Zubereitungen, die Polyvinylbutyral enthalten, sind bekannt. Die meisten derartigen Systeme basieren auf dem Einsatz von ionischen Emulgatoren (Salze von Fettsäuren, Alkansulfonate oder Alkyllaurylsulfonate: US-A 2,686,724, US-A 2,532,223, US-A 2,611,755, US-A 2,509,667, DE-A 27 52 054) oder von nichtionischen Emulgatoren (Polyvinylalkohol (JP-A 58/026374), äthoxylierte Fettalkohole, Umsetzungsprodukte von Polyalkylenglykolen mit Polyepoxiden (DE-P 43 27 369)).

Alle diese fremdemulgierten Systeme weisen jedoch den generellen Nachteil auf, daß eine direkte Pigmentierung von Lacken nicht möglich ist, die solche Dispersionen als Bindemittelkomponente enthalten, da die Scherstabilität der Dispersionen nicht ausreichend ist. Dazu kommen noch Nachteile durch den Emulgatortyp: bei hochmolekularen Polyäthylenglykol-Typen nimmt die Wasserfestigkeit der Filme rasch ab und bei Verwendung von niedermolekularen ionischen Emulgatoren ist eine Migration der Emulgatormoleküle im Film, sowie ein Herauslösen aus dem Harzverbund möglich, wodurch eine ständig wechselnde Oberflächenzusammensetzung bzw. wechselnde Filmeigenschaften bedingt sind.

Auch selbstemulgierende wäßrige Polyvinylbutyral-Dispersionen wurden beschrieben: dabei werden die für die Wasserverdünnbarkeit verantwortlichen Gruppen (ionischer oder nichtionischer Art) vor dem Acetalisierungsprozeß in das Polymer eingeführt:

In DE-A 32 46 605 wird eine Polyäthylenoxidpfropfgrundlage für die Herstellung des Polyvinylalkohols verwendet, welcher anschließend acetalisiert wird und aufgrund des Gehaltes an Polyäthylenglykolsegmenten zu wasserverdünnbaren Endprodukten führt; in DE-A 42 35 151 wird ein Polyvinylalkoholcopolymerisat mit Äthylensulfonat (in Salzform) hergestellt, welches einer Acetalisierung unterworfen wird und durch den Gehalt an Sulfonat-Gruppen wasserverdünnbare Produkte ergibt.

Da in beiden Fällen von wäßrigen Polyvinylalkohol-Lösungen ausgegangen wird, fallen die erhaltenen Dispersionen mit recht niedrigem Festkörpergehalt an. Eine nachträgliche Abmischung mit Plastifizierharzen, die sehr häufig zur Verbesserung der Filmbildung eingesetzt werden, ist durch die reduzierte Verträglichkeit der modifizierten Produkte kaum mehr möglich. Außerdem sind die Produkte durch die Polyäthylenglykol-Struktur bzw. die Sulfonatgruppen recht empfindlich gegen Wasser und genügen nicht den Anforderungen für einen industriellen Einsatz.

Es wurde nun gefunden, daß durch Kombination von "Fremdemulgierung" und "Selbstemulgierenden Anteilen" durch ein NCO-funktionelles Emulgatorharz eine Synergie der positiven Effekte auftritt: es werden Dispersionen mit hohen Feststoff-Massenanteilen (40 bis 50 %) erhalten, die scherstabil sind, frei sind von niedermolekularen und damit migrationsfähigen Anteilen, gute Lagerstabilitäten aufweisen und durch die Verwendung eines Emulgatorharzes im Vergleich zu niedermolekularen Emulgatoren eine wesentlich reduzierte Schaumbildung ergeben. Zudem ist es durch das erfindungsgemäße Verfahren möglich, die für einen Anwendungszweck optimale Harzzusammensetzung (nieder-, normal-, hochacetalisierte PVB-Typen, unterschiedliche molare Massen, oder Kombinationen mit Plastifizierharzen) in eine wäßrige Dispersionsform überzuführen.

Die Erfindung betrifft demgemäß ein Verfahren zur Herstellung von wasserverdünnbaren Polyvinylbutyral-Dispersionen, welches dadurch gekennzeichnet ist, daß man
- A: eine aliphatische Säure mit ein bis drei gegenüber Isocyanat reaktiven Gruppen und ein bis drei Säuregruppen oder ein Gemisch solcher Säuren mit
- B: einem oder mehreren mehrfunktionellen Isocyanaten umsetzt, wobei deren durchschnittliche Funktionalität mindestens zwei beträgt, und
die Stoffmenge der Isocyanatkomponente B so gewählt ist, daß das Verhältnis der Anzahl der Isocyanatgruppen zur Anzahl der gegenüber Isocyanat reaktiven Gruppen der Komponente A zwischen 2,2 : 1 und 1,7 : 1 liegt, und die Umsetzung so lange andauert, bis der berechnete restliche Isocyanatgehalt erreicht ist, und hierauf
25 bis 75 % der verbliebenen Isocyanat-Gruppen mit
- C: mindestens einer monofunktionellen Verbindung ausgewählt aus Mono- alkoholen und Monoaminen abreagiert,
bis der berechnete Isocyanatgruppen-Gehalt erreicht ist, und dieses NCOfunktionelle Emulgatorharz mit
- D: einem Gemisch aus Massenanteilen von
D1 30 bis 100 % Polyvinylbutyral und
D2 0 bis 70 % eines geeigneten Plastifizierharzes oder eines Gemisches geeigneter Plastifizierharze
unter Verwendung eines geeigneten Hilfslösemittels bis zum vollständigen Umsatz aller Isocyanat-Gruppen weiterreagiert, mit der Maßgabe, daß die Summe der Massenanteile von D1 und D2 100 % beträgt und das entstehende Reaktionsprodukt Säuregruppen in einer solchen Menge aufweist, daß die Säurezahl des Festharzes (Masse an zur Neutralisation benötigtem KOH pro Masse des Festharzes) zwischen 5 und 50 mg/g beträgt.

Nach Neutralisation von mindestens 50 % der freien Säuregruppen mit anorganischen Basen, Ammoniak, Aminen oder Aminoalkoholen werden die erfindungsgemäßen Produkte mit deionisiertem Wasser verdünnt.

Das verwendete Hilfslösemittel wird dabei - je nach Viskosität des Produktes - entweder vor Neutralisation bei reduziertem Druck oder im Azeotrop bei Normaloder reduziertem Druck aus der Dispersion abdestilliert.

Als Komponente A werden gesättigte, lineare, verzweigte oder cyclische aliphatische Säuren eingesetzt mit ein bis drei gegenüber Isocyanat reaktiven Gruppen und mit 2 bis 25 Kohlenstoffatomen, bevorzugt 3 bis 10 Kohlenstoffatomen. Die gegenüber Isocyanat reaktiven Gruppen sind ausgewählt aus Hydroxylgruppen, primären und sekundären Aminogruppen und Mercaptangruppen, bevorzugt werden Hydroxylgruppen. Die Säuregruppen sind ausgewählt aus Carbon-, Sulfon- und Phosphonsäuregruppen, bevorzugt werden Carbonsäuren. Sie haben im allgemeinen 1 bis 3 Säuregruppen, bevorzugtermaßen eine Säuregruppe im Molekül. Beispiele für derartige Verbindungen sind Hydroxypivalinsäure, Dihydroxypropionsäure, Dihydroxybernsteinsäure, Weinsäure, Citronensäure und Äpfelsäure, weiter Glutaminsäure, Lysin, Serin, Taurin, Aminoäthyl- und Aminopropylphosphonsäure, Mercaptoessigsäure, Dimercaptopropansulfonsäure und 3-Mercaptopropansulfonsäure. Bevorzugt sind die Hydroxycarbonsäuren, eine besonders bevorzugte Gruppe sind die Dihydroxyalkansäuren, und unter diesen die 2,2-Dimethylolalkansäuren wie 2,2-Dimethylolessigsäure, 2,2-Dimethylolpropionsäure sowie 2,2-Dimethylolpentansäure.

Die Komponente A kann zur einfacheren Syntheseführung in einem inerten, hochsiedenden wasserverträglichen Lösemittel (z.B. N-Methyl-Pyrrolidon) gelöst werden, welches späterhin auch einen verbesserten Verlauf und eine verbesserte Filmbildung ermöglicht. Üblicherweise werden Massenanteile von 0 bis 20 % (bezogen auf die endgültige Festharzmasse) an derartigen Lösemitteln (Koaleszenzmitteln) eingesetzt. Lösemittel mit NCO-reaktiven Gruppen (beispielsweise Butylglykol, Glykoläther) werden gegebenenfalls erst nach abgeschlossener Isocyanatreaktion zugesetzt.

Bei der Isocyanatkomponente B handelt es sich um beliebige organische mehrfunktionelle Isocyanate mit aliphatisch, cycloaliphatisch, araliphatisch und/oder aromatisch gebundenen, freien Isocyanatgruppen. Die Isocyanate haben 3 bis 30, vorzugsweise 9 bis 20 Kohlenstoffatome. Bevorzugt werden Diisocyanate eingesetzt. In einer weiteren bevorzugten Ausführungsweise werden bis zu 10 % der Diisocyanate durch höherfunktionelle Isocyanate ersetzt. Auch die Allophanate, Isocyanurate und Biurete von den oben genannte Diisocyanaten lassen sich im Rahmen der Erfindung verwenden. Die Auswahl der Zusammensetzung der Isocyanatkomponente erfolgt nach Viskosität der entstehenden Produkte und dem Anforderungsprofil für den jeweiligen Verwendungszweck. Geeignete Diisocyanate sind beispielsweise die aliphatischen Diisocyanate Diisocyanatomethan, Diisocyanato-äthan und -butan, Hexamethylendiisocyanat, Trimethylhexamethylendiisocyanat, cycloaliphatische Diisocyanate wie Isophorondiisocyanat, 1,4-Diisocyanatocyclohexan und 4,4'-Diisocyanatodicyclohexylmethan, aromatische Diisocyanate wie Toluylendiisocyanat (TDI), dessen technisches Isomerengemisch, 4,4'-Diphenylmethandiisocyanat, 3,3'-Dimethyl- und 3,3'-Dimethoxydiphenyl-4,4'-diisocyanat (Tolidin- und Anisidin-Diisocyanat), und aralipha-tische Diisocyanate wie das Tetramethylxylylen-diisocyanat. Geeignete höherfunktionelle Isocyanate sind beispielsweise die Addukte von Diisocyanaten mit drei- oder höherfunktionellen Alkoholen, wie das Addukt von Trimethylolpropan mit drei Mol TDI, die oben genannten Isocyanurate von Diisocyanaten, oder das "Polymere MDI", das ein technisches Gemisch von zwei-, drei- und mehrkernigen Polyisocyanaten ist, hergestellt durch Phosgenierung des Polyamingemisches, das bei der Reaktion von Formaldehyd mit Anilin anfällt.

Falls die Reaktivität der eingesetzten Isocyanate mit der Komponente A und/oder der Komponente C nicht ausreichend ist, werden für die Isocyanatreaktion bekannte und dem Fachmann vertraute Katalysatoren eingesetzt (beispielsweise Dibutylzinndilaurat, Triäthylamin).

Die Monoalkohole der Komponente C sind vorzugsweise aliphatische Alkohole mit linearer oder verzweigter Kohlenstoffkette und weisen 2 bis 30 Kohlenstoffatome auf. Neben herkömmlichen Alkoholen können auch einfach verätherte Mono-, Di- oder Oligoglykole mit Oxyalkylengruppen mit zwei bis vier Kohlenstoffatomen und einem Polymerisationsgrad bis ca. 20, Umsetzungsprodukte von Monoepoxiden mit (gegebenenfalls ungesättigten) Monocarbonsäuren mit aliphatischer, cycloaliphatischer und/oder aromatischer Struktur, monohydroxyfunktionelle Ester der (Meth-)Acrylsäure und/oder hydroxyfunktionelle Allyläther (beispielsweise Trimethylolpropan-diallyläther) eingesetzt werden.

Die Monoamine der Komponente C sind ausgewählt aus den aliphatischen linearen und verzweigten primären und sekundären Monoaminen mit 2 bis 30 Kohlenstoffatomen. Beispiele sind n-Butylamin, 2-Äthylhexylamin, Isodecylamin und Stearylamin. Geeignet sind auch Polyoxyalkylen-Monoamine, die Oxyalkylengruppen mit 2 bis 4 Kohlenstoffatomen enthalten können. Solche Amine werden beispielsweise unter den Handelsbezeichnungen ®Jeffamine M und ®Novamin angeboten. Auch Alkoxyalkylamine sind als Bestandteil der Komponente C geeignet, wie beispielsweise 2-Methoxyäthanolamin.

Es können auch Mischungen von Monoaminen und Monoalkoholen (auch untereinander) eingesetzt werden.

Die Komponente D besteht aus einem Gemisch von Massenanteilen von
- D1: 30 bis 100 %, bevorzugt 35 bis 95 %, Polyvinylbutyral oder einem Gemisch von Polyvinylbutyralen und
- D2: 0 bis 70 %, bevorzugt 5 bis 65 %, eines geeigneten Plastifizierharzes oder einem Gemisch geeigneter Plastifizierharze
wobei die Summe der Massenanteile von D1 und D2 stets 100 % ergibt, mit der Maßgabe, daß das erfindungsgemäße Endprodukt Säuregruppen in einer Menge entsprechend einer Säurezahl des Festharzes von 5 bis 50 mg/g aufweist.

Als Polyvinylbutyral für die beanspruchten Dispersionen kommen alle üblichen und bekannten Typen von Polyvinylbutyral in Frage. Übliche Kenndaten sind beispielsweise: Viskosität (6 %ige Lösung in Methanol bei 20 °C) 1 bis 200 mPa.s; Acetalisierungsgrad 65 bis 90 % (berechnet als Polyvinylacetal); Acetat-Massenanteil 2 bis 5 % (berechnet als Polyvinylacetat); Massenanteil an OH-Gruppen 10 bis 30 % (berechnet als Polyvinylalkohol).

Plastifizierharze verbessern die filmbildenden Eigenschaften und die Flexibilität der Polyvinylbutyraldispersionen. Geeignete Plastifizierharze sind beispielsweise Phenolharze, Novolake, Dialkylphthalate, Rizinusöl, Epoxidharze und spezielle Alkydharze.

Als Hilfslösemittel sind Lösemittel mit einem Siedepunkt von maximal 150 °C verwendbar, die vorzugsweise ein Azeotrop mit Wasser bilden und ein gutes Lösevermögen für das Polyvinylbutyral besitzen. Enthält das Hilfslösemittel NCOreaktive Gruppen, so kann es erst nach vollständiger Reaktion der Diisocyanate zugesetzt werden. Je nach Viskosität des erfindungsgemäßen Produktes wird das Hilfslösemittel vor Neutralisation unter vermindertem Druck abdestilliert oder im Azeotrop aus der Dispersion abdestilliert (gegebenenfalls auch bei vermindertem Druck).

Zur Neutralisation werden anorganische Basen (Lithium-, Natrium-, oder Kaliumhydroxid), wäßrige Ammoniak-Lösungen oder handelsübliche Amine verwendet. Üblicherweise wird zur Erzielung eines möglichst hohen Festkörpergehalts der Dispersion nur mit der für die Stabilität der Dispersion gerade ausreichenden Menge an Neutralisationsmittel gearbeitet (mindestens werden jedoch 50 % der freien Säuregruppen neutralisiert).

Filme auf der Grundlage der erfindungsgemäßen Dispersionen zeigen ausgezeichnete Haftungen auf Metall, Kunststoffen und Glas. Damit gefertigte Grundierungen zeigen auch gute Zwischenschichthaftung, sodaß auch eine gute Überlackierbarkeit erreicht wird.

In Abhängigkeit von der Natur des Plastifizierharzes können auch Filme mit ausgezeichneter Härte, Wasserbeständigkeit und Korrosionsschutzwirkung hergestellt werden.

Erfindungsgemäße Dispersionen können daher als Bindemittel für Beschichtungen, "Washprimer", Industrielacke, temperaturbeständige Lacke (z. B. Heizkörperbeschichtung), Emballagenlacke, Haftgrundierungen, Schweißprimer, Parkettlacke, Straßenmarkierfarben und Klebstoffe verwendet werden.

In Kombination mit verträglichen (d.h. in der Kombination nicht entmischenden) wäßrigen Systemen können die erfindungsgemäßen Dispersionen für zahlreiche weitere Anwendungen eingesetzt werden: besonders hingewiesen sei auf die Kombination mit wäßrigen Phenolharzen, wodurch eine Plastifizierung der Filme ohne Einbuße an Temperaturstabilität und Wasserfestigkeit erreicht werden kann. Dies ist vor allem für den Schleifmittelsektor interessant, wo die im Grundbinder eingesetzten Phenolharze zu hart sind. In Kombination mit erfindungsgemäßen Dispersionen ergibt sich eine positive Plastifizierung, eine Verbesserung der Haftung auf diversen Substraten und eine erhöhte Antrocknungsgeschwindigkeit.

Auch in Kombination mit wasserverdünnbaren Aminoplastharzen (z.B. Melaminund Harnstoff-Formaldehyd-Vorkondensaten) ergeben sich gleiche Effekte wie bei Phenolharzen.

Im Beschreibungstext und in den nachfolgenden Beispielen sind alle Gehalte und Konzentrationen, sofern nicht ausdrücklich anders gekennzeichnet, stets Massenanteile, die in der Einheit % (g/100 g) angegeben werden.

### Beispiele:

### Beispiel 1:

446 g einer 30 %igen Lösung von Dimethylolpropionsäure (1 mol der Säure) in N-Methylpyrrolidon (NMP) wird zu 348 g handelsüblichem Toluylendiisocyanat (TDI, 2 mol) zugetropft. Die Temperatur überschreitet dabei nicht 40 °C; gegebenenfalls wird gekühlt. Ist der theoretische Isocyanatgruppengehalt von 10;5 % erreicht, wird eine Mischung aus 54 g Isopropylalkohol (0,9 mol) und 134 g eines Umsetzungsproduktes aus Rizinenfettsäure und ®Cardura E10 (Glycidylester der Neodecansäure, 0,25 Mol) zugetropft; es wird solange bei 50 °C gehalten, bis der theoretische Isocyanatgruppen-Gehalt von 3,6 % erreicht wird.

Hierauf werden 600 g Xylol, 900 g ®Beckopox EM 460 (lösemittelfreies Umsetzungsprodukt aus Bisphenol-A-diglycidyläther, Phenol und Bisphenol-A) und 900 g Polyvinylbutyral in Form einer Mischung aus 600 g ®Mowital B 20 H (Polyvinylbutyral) und 300 g ®Mowital B 30 HH (Polyvinylbutyral) portionsweise zugesetzt und die Harzlösung langsam auf maximal 120 °C erwärmt. Es wird so lange gerührt, bis eine homogene Harzlösung entstanden ist.

Nach Abkühlen auf 95 bis 100 °C werden 100 % der freien Carboxylgruppen mit 5 %iger Ammoniaklösung neutralisiert, anschließend wird mit deionisiertem Wasser auf ca. 45 % Festkörper-Massenanteil (ohne Berücksichtigung des Xylols) verdünnt. Hierauf wird das Xylol quantitativ aus der Dispersion abdestilliert, und mit deionisiertem Wasser erneut auf 50 % Festkörper-Massenanteil eingestellt.

Kenndaten der erhaltenen Dispersion:

| | |
|---|---|
| Feststoff-Massenanteil: | 49,9 % |
| Säurezahl (Festharz): | 23 mg/g |
| pH-Wert (25 %ige Lösung): | 6,9 |

### Beispiel 2:

336 g Hexamethylendiisocyanat (HMDI), 134 g Dimethylolpropionsäure und 200 g NMP werden bei max. 55 °C solange gerührt, bis der theoretische Isocyanat-Massenanteil von 12,5 % erreicht wird (verläuft die Reaktion nicht ausreichend schnell, kann mit Dibutylzinndilaurat oder Triäthylamin katalysiert werden). Zu diesem Additionsprodukt wird eine Mischung aus 117 g 2-Äthylhexanol (0,9 mol) und 75 g Trimethylolpropandiallyläther (0,3 mol) zugesetzt und bei 70 °C reagiert, bis ein Isocyanatgruppen-Gehalt von 3,9 % erreicht wird.

Hierauf werden 600 g Xylol, 200 g Beckopox EM 460/lösemittelfrei und 600 g Polyvinylbutyralmischung aus 400 g Mowital B 20 H und 200 g Mowital B 40 H bei langsamen Erwärmen auf maximal 120 °C zugegeben. Es wird solange gerührt, bis eine homogene Harzlösung entsteht.

Nach Abkühlen auf 95 bis 100 °C werden 75 % der Carboxylgruppen mit LiOH (5 %ige Lösung) neutralisiert und mit deionisiertem Wasser auf 40 % Feststoff-Massenanteil (ohne Berücksichtigung des Xylols) verdünnt.

Das Xylol wird anschließend quantitativ aus der Dispersion im Azeotrop abdestilliert und ein Feststoff-Massenanteil von 40 % eingestellt.

Kenndaten der erhaltenen Dispersion:

| | |
|---|---|
| Festkörper-Massenanteil: | 40,2 % |
| Säurezahl | 38 mg/g |
| pH (25%ige Lösung) = | 8,5 |

### Beispiel 3 (Kontrollversuch):

100,5 g Hydroxypivalinsäure (0,85 mol) und 20,1 g Dimethylolpropionsäure (0,15 mol) werden mit 193,2 g HMDI (1,15 mol) und 200 g NMP bei maximal 55°C so lange gerührt, bis der theoretische Isocyanatgruppengehalt von 9,4 % erreicht ist.

Es werden 930 g Beckopox EM 460/lösemittelfrei, 930 g Mowital B 20 H, sowie 500 g Xylol zugesetzt und langsam auf maximal 120° erhitzt. Es wird so lange gerührt, bis eine homogene Harzlösung entsteht.

Bei 120° C wird Vakuum angelegt (90 mbar) und das Xylol aus der Harzschmeize abdestilliert. Nach Abkühlen auf 100 °C werden 90% der Carboxylgruppen (theoretische Säurezahl des Festharzes = 25,8 mg/g) mit 5%iger Ammoniaklösung neutralisiert; danach wird mit deionisiertem Wasser verdünnt. Es entsteht eine inhomogene Dispersion.

### Beispiel 4 (Kontrollversuch):

Versuch 3 wird wiederholt, das Xylol wird aber erst nach Neutralisation mit LiOH (90 % der Carboxylgruppen wie oben) und Verdünnung mit Wasser abdestilliert. Die Dispersion ist schon bei der Verdünnung mit Wasser inhomogen und zerfällt bei der azeotropen Destillation in Festharz und Wasserphase.

### Beispiel 5: Wash-Primer bzw. Shop-Primer

Das Bindemittel aus Beispiel 1 wird:
- 5.1: mit farbgebenden anorganischen oder organischen Pigmenten (1 bis 100 % der Masse des festen Bindemittels), oder
- 5.2: mit Korrosionsschutzpigmenten (0,1 bis 80 % der Masse des festen Bindemittels, vorzugsweise Zinkphosphat), oder mit
- 5.3: Füllstoffen, vorzugsweise Talkum oder Bariumsulfat in einer Menge von 2 bis 200 % der Masse des festen Bindemittels, oder
- 5.4: mit Mischungen von zwei oder drei der unter 5.1 bis 5.3 angeführten Pigmenten bzw. Füllstoffen in einer Menge von 1 bis 300 % der Masse des festen Bindemittels vermischt.

Derart hergestellte Lacke zeigen mit oder ohne Zusatz von Phosphorsäure (0 bis 30 % bezogen auf die Masse des festen Bindemittels), eine schnelle Trocknung, nach der Trocknung eine hohe Härte, sowie eine gute Haftung auf Eisen, Aluminium, verzinktem Stahl und Edelmetallen und guten Korrosionsschutz.

## Patentansprüche

1. Verfahren zur Herstellung von wasserverdünnbaren Polyvinylbutyral-Dispersionen, **dadurch gekennzeichnet, daß**
A eine aliphatische Säure mit ein bis drei gegenüber Isocyanat reaktiven Gruppen und ein bis drei Säuregruppen oder ein Gemisch solcher Säuren mit
B einem oder mehreren mehrfunktionellen Isocyanaten umgesetzt wird, wobei deren durchschnittliche Funktionalität mindestens zwei beträgt, und
die Stoffmenge der Isocyanatkomponente B so gewählt ist, daß das Verhältnis der Anzahl der Isocyanatgruppen zur Anzahl der gegenüber Isocyanat reaktiven Gruppen der Komponente A zwischen 2,2 : 1 und 1,7 : 1 liegt, und die Umsetzung so lange andauert, bis der berechnete restliche Isocyanatgehalt erreicht ist, und hierauf 25 bis 75 % der verbliebenen Isocyanat-Gruppen mit
C mindestens einer monofunktionellen Verbindung ausgewählt aus Mono- alkoholen und Monoaminen abreagiert werden,
bis der berechnete Isocyanatgruppen-Gehalt erreicht ist, und dieses NCOfunktionelle Emulgatorharz mit
D einem Gemisch aus Massenanteilen von
D1 30 bis 100 % Polyvinylbutyral und
D2 0 bis 70 % eines geeigneten Plastifizierharzes oder eines Gemisches geeigneter Plastifizierharze
unter Verwendung eines geeigneten Hilfslösemittels bis zum vollständigen Umsatz aller Isocyanat-Gruppen weiterreagiert wird, mit der Maßgabe, daß die Summe der Massenanteile von D1 und D2 100 % beträgt und das entstehende Reaktionsprodukt Säuregruppen in einer solchen Menge aufweist, daß die Säurezahl des Festharzes zwischen 5 und 50 mg/g beträgt.

2. Verfahren gemäß Anspruch 1, **dadurch gekennzeichnet, daß** die Komponente A aus einer oder mehreren gesättigten, linearen, verzweigten oder cyclischen aliphatischen Säuren mit 2 bis 25 Kohlenstoffatomen besteht, die ausgewählt sind aus Carbon-, Sulfon- und Phosphonsäuren.

3. Verfahren gemäß Anspruch 1, **dadurch gekennzeichnet, daß** die Komponente A aus einer oder mehreren gesättigten, linearen, verzweigten oder cyclischen aliphatischen Carbonsäuren mit 2 bis 25 Kohlenstoffatomen besteht.

4. Verfahren gemäß Anspruch 1, **dadurch gekennzeichnet, daß** die isocyanatreaktiven Gruppen der Komponente A ausgewählt sind aus Hydroxyl-, primären und sekundären Amino- und Mercapto-Gruppen.

5. Verfahren gemäß Anspruch 1, **dadurch gekennzeichnet, daß** die isocyanatreaktiven Gruppen der Komponente A Hydroxylgruppen sind.

6. Verfahren gemäß Anspruch 1, **dadurch gekennzeichnet, daß** die Verbindungen der Komponente A zwei Hydroxylgruppen und eine Carbonsäuregruppe aufweisen.

7. Verfahren gemäß Anspruch 1, **dadurch gekennzeichnet, daß** Dimethylolpropionsäure als Komponente A eingesetzt wird.

8. Verfahren gemäß Anspruch 1, **dadurch gekennzeichnet, daß** die Komponente A in einem inerten hochsiedenden wassermischbaren Lösungsmittel gelöst wird.

9. Verfahren gemäß Anspruch 1, **dadurch gekennzeichnet, daß** die Komponente B aus einem oder mehreren organischen Diisocyanaten besteht.

10. Verfahren gemäß Anspruch 8, **dadurch gekennzeichnet, daß** bis zu 10 % der Diisocyanate der Komponente B ersetzt ist durch höherfunktionelle Isocyanate.

11. Verfahren gemäß Anspruch 8, **dadurch gekennzeichnet, daß** die Diisocyanate der Komponente B ausgewählt sind aus aliphatischen, cycloaliphatischen und aromatischen Diisocyanaten mit 3 bis 30 Kohlenstoffatomen.

12. Verfahren gemäß Anspruch 1, **dadurch gekennzeichnet, daß** die Komponente C ausgewählt ist aus den aliphatischen Alkoholen mit linearer oder verzweigter Kohlenstoffkette mit 2 bis 30 Kohlenstoffatomen, aus einfach verätherten Mono-, Di-, und Oligoglykolen mit Oxyalkylengruppen mit jeweils zwei bis vier Kohlenstoffatomen und einem Polymerisationsgrad von bis zu 20, Umsetzungsprodukten von Monoepoxiden mit aliphatischen, cycloaliphatischen oder aromatischen Monocarbonsäuren, monohydroxyfunktionellen Estern der Acryloder Methacrylsäure und den hydroxyfunktionellen Allyläthern, sowie aus den aliphatischen linearen oder verzweigten primären und sekundären Monoaminen mit 2 bis 30 Kohlenstoffatomen, den Polyoxyalkylen-Monoaminen mit Oxyalkylengruppen mit zwei bis vier Kohlenstoffatomen, den Alkoxyalkylaminen mit 3 bis 30 Kohlenstoffatomen, oder Mischungen dieser Verbindungen.

13. Verfahren gemäß Anspruch 1, **dadurch gekennzeichnet, daß** als Komponente D ein Gemisch von Massenanteilen von
D1 30 bis 100 % eines oder mehrerer Polyvinylbutyrale und
D2 0 bis 70 % eines geeigneten Plastifizierharzes oder eines Gemisches geeigneter Plastifizierharze eingesetzt wird.

14. Verfahren gemäß Anspruch 1, **dadurch gekennzeichnet, daß** die Polyvinylbutyrale der Komponente D1 eine Lösungsviskosität von 1 bis 200 mPa·s, gemessen an einer 6 %igen methanolischen Lösung bei 23 °C, einen Acetalisierungsgrad von 65 bis 90 %, einen Massenanteil an Acetatgruppen von 2 bis 5 % und einen Massenanteil an Hydroxylgruppen von 10 bis 30 % aufweisen.

15. Verfahren gemäß Anspruch 1, **dadurch gekennzeichnet, daß** als Plastifizierharze Phenolharze, Novolake, Dialkylphthalate, Epoxidharze, Rizinusöl und Alkydharze jeweils einzeln oder im Gemisch eingesetzt werden.

16. Wäßrige Polyvinylbutyraldispersionen, hergestellt nach dem Verfahren von Anspruch 1.

17. Wäßrige Polyvinylbutyraldispersionen gemäß Anspruch 16, enthaltend organische Lösemittel in einem Massenanteil 0,5 bis 20 %.

18. Verwendung der wäßrigen Polyvinylbutyraldispersionen nach Anspruch 16 als Bindemittel für Beschichtungen.

19. Gemische wäßriger Bindemittel, enthaltend wäßrige Polyvinylbutyraldispersionen nach Anspruch 16.

20. Gemische wäßriger Bindemittel, enthaltend wäßrige Polyvinylbutyraldispersionen nach Anspruch 16 und wäßrige Dispersionen von Phenolharzen.

21. Gemische wäßriger Bindemittel, enthaltend wäßrige Polyvinylbutyraldispersionen nach Anspruch 16 und wäßrige Dispersionen von Aminoplastharzen.

22. Verwendung wäßriger Polyvinylbutyraldispersionen nach Anspruch 16 als Haftgrundierung.

23. Verwendung wäßriger Polyvinylbutyraldispersionen nach Anspruch 16 als Flexibilisierharz für wäßrige Phenolharze bei der Herstellung von Bindemitteln für Schleifmittel.

## Claims

1. A process for the preparation of water-dilutable polyvinylbutyral dispersions, which comprises reacting
A an aliphatic acid having from one to three groups which are reactive toward isocyanate and from one to three acid groups, or a mixture of such acids, with
B one or more polyfunctional isocyanates whose average functionality is at least two, and
the quantity of the isocyanate component B is chosen such that the ratio of the number of isocyanate groups to the number of groups of component A which are reactive toward isocyanate is between 2.2:1 and 1.7:1, and the reaction is continued until the calculated residual isocyanate content has been reached, at which point from 25 to 75% of the remaining isocyanate groups are reacted with
C at least one monofunctional compound selected from monoalcohols and monoamines
until the calculated isocyanate group content has been reached, and this NCO-functional emulsifier resin is reacted further with
D a mixture of proportions by mass of
D1from 30 to 100% of polyvinylbutyral and
D2from 0 to 70% of an appropriate plasticizer resin or of a mixture of appropriate plasticizer resins,
using a suitable auxiliary solvent, until complete conversion of all isocyanate groups, with the proviso that the sum of the proportions by mass of D1 and D2 is 100% and the reaction product formed has a quantity of acid groups which is such that the acid number of the solid resin is between 5 and 50 mg/g.

2. The process as claimed in claim 1, wherein component A comprises one or more saturated, linear, branched or cyclic aliphatic acids having 2 to 25 carbon atoms, which are selected from carboxylic, sulfonic and phosphonic acids.

3. The process as claimed in claim 1, wherein component A comprises one or more saturated, linear, branched or cyclic aliphatic carboxylic acids having 2 to 25 carbon atoms.

4. The process as claimed in claim 1, wherein the isocyanate-reactive groups of component A are selected from hydroxyl groups, primary and secondary amino groups and mercapto groups.

5. The process as claimed in claim 1, wherein the isocyanate-reactive groups of component A are hydroxyl groups.

6. The process as claimed in claim 1, wherein the compounds of component A have two hydroxyl groups and one carboxylic acid group.

7. The process as claimed in claim 1, wherein dimethylolpropionic acid is employed as component A.

8. The process as claimed in claim 1, wherein component A is dissolved in an inert, high-boiling, water-miscible solvent.

9. The process as claimed in claim 1, wherein component B comprises one or more organic diisocyanates.

10. The process as claimed in claim 8, wherein up to 10% of the diisocyanates of component B are replaced by isocyanates of higher functionality.

11. The process as claimed in claim 8, wherein the diisocyanates of component B are selected from aliphatic, cycloaliphatic and aromatic diisocyanates having 3 to 30 carbon atoms.

12. The process as claimed in claim 1, wherein component C is selected from the aliphatic alcohols having a linear or branched carbon chain with 2 to 30 carbon atoms, from monoetherified mono-, di- and oligoglycols containing oxyalkylene groups having in each case from two to four carbon atoms and a degree of polymerization of up to 20, reaction products of monoepoxides with aliphatic, cycloaliphatic or aromatic monocarboxylic acids, monohydroxy-functional esters of acrylic or methacrylic acid, and hydroxy-functional allyl ethers, and from the aliphatic, linear or branched, primary and secondary monoamines having 2 to 30 carbon atoms, the polyoxyalkylene-monoamines containing oxyalkylene groups having from two to four carbon atoms, the alkoxyalkylamines having 3 to 30 carbon atoms, or mixtures of these compounds.

13. The process as claimed in claim 1, wherein as component D a mixture of proportions by mass of
D1 from 30 to 100% of one or more polyvinylbutyrals, and
D2 from 0 to 70% of an appropriate plasticizer resin or a mixture of appropriate plasticizer resins, is employed.

14. The process as claimed in claim 1, wherein the polyvinylbutyrals of component D1 have a solution viscosity of from 1 to 200 mPa·s, measured on a 6% strength methanolic solution at 23°C, a degree of acetalization of from 65 to 90%, a proportion by mass of acetate groups of from 2 to 5%, and a proportion by mass of hydroxyl groups of from 10 to 30%.

15. The process as claimed in claim 1, wherein the plasticizer resins employed are phenolic resins, novolaks, dialkyl phthalates, epoxy resins, castor oil and alkyd resins, in each case individually or in a mixture.

16. An aqueous polyvinylbutyral dispersion prepared by the process of claim 1.

17. An aqueous polyvinylbutyral dispersion as claimed in claim 16 comprising organic solvents in a proportion by mass of from 0.5 to 20%.

18. The use of an aqueous polyvinylbutyral dispersion as claimed in claim 16 as a binder for coatings.

19. A mixture of aqueous binders comprising an aqueous polyvinylbutyral dispersion as claimed in claim 16.

20. A mixture of aqueous binders comprising an aqueous polyvinylbutyral dispersion as claimed in claim 16 and an aqueous dispersion of phenolic resins.

21. A mixture of aqueous binders comprising an aqueous polyvinylbutyral dispersion as claimed in claim 16 and an aqueous dispersion of amino resins.

22. The use of an aqueous polyvinylbutyral dispersion as claimed in claim 16 as an adhesion primer.

23. The use of an aqueous polyvinylbutyral dispersion as claimed in claim 16 as a flexibilizer resin for aqueous phenolic resins in the preparation of binders for abrasives.

## Revendications

1. Procédé de préparation de dispersions diluables à l'eau de polyvinylbutyral, **caractérisé en ce qu'**on fait réagir
A. un acide aliphatique ayant un à trois groupes réactifs vis-à-vis des isocyanates et un à trois groupes acides ou un mélange de ces acides, avec
B. un ou plusieurs polyisocyanates, leur fonctionnalité moyenne étant au moins égale à deux, et
on choisit la quantité du composant isocyanate B de façon que le rapport entre le nombre des groupes isocyanate et le nombre des groupes réactifs vis-à-vis des isocyanates du composant A soit compris entre 2,2:1 et 1,7:1, et que la réaction dure suffisamment pour que l'on arrive à la teneur résiduelle calculée en isocyanate, puis on fait réagir complètement 25 à 75 % des groupes isocyanate restants avec
C. au moins un composé monofonctionnel choisi parmi les monoalcools et les monoamines,
jusqu'à arriver à la teneur calculée en groupes isocyanate, puis on poursuit la réaction de cette résine émulsifiante à fonctionnalité NCO avec
D. un mélange, les pourcentages étant en masse,
D1. de 30 à 100 % de polyvinylbutyral, et
D2. de 0 à 70 % d'une résine plastifiante appropriée ou d'un mélange de résines plastifiantes,
par utilisation d'un solvant auxiliaire approprié, jusqu'à conversion complète de l'ensemble des groupes isocyanate, à la condition que la somme des pourcentages en masse de D1 et D2 soit de 100 %, et que le produit de réaction ainsi obtenu comporte des groupes acides en une quantité telle que l'indice d'acide de la résine solide soit compris entre 5 et 50 mg/g.

2. Procédé selon la revendication 1, **caractérisé en ce que** le composant A est constitué d'un ou plusieurs acides aliphatiques saturés, à chaîne droite, ramifiée ou cyclique, ayant de 2 à 25 atomes de carbone, qui sont choisis parmi les acides carboxyliques, sulfoniques et phosphoniques.

3. Procédé selon la revendication 1, **caractérisé en ce que** le composant A est constitué d'un ou plusieurs acides carboxyliques aliphatiques saturés à chaîne droite, ramifiée ou cyclique, ayant de 2 à 25 atomes de carbone.

4. Procédé selon la revendication 1, **caractérisé en ce que** les groupes réactifs vis-à-vis des isocyanates du composant A sont choisis parmi les groupes hydroxyle, amino primaire et amino secondaire, et mercapto.

5. Procédé selon la revendication 1, **caractérisé en ce que** les groupes réactifs vis-à-vis des isocyanates du composant A sont des groupes hydroxyle.

6. Procédé selon la revendication 1, **caractérisé en ce que** les composés du composant A comportent deux groupes hydroxyle et un groupe acide carboxylique.

7. Procédé selon la revendication 1, **caractérisé en ce qu'**on utilise en tant que composant A l'acide diméthylolpropionique.

8. Procédé selon la revendication 1, **caractérisé en ce que** le composant A est soumis à une dissolution dans un solvant inerte, miscible à l'eau et à haut point d'ébullition.

9. Procédé selon la revendication 1, **caractérisé en ce que** le composant B est constitué d'un ou plusieurs diisocyanates organiques.

10. Procédé selon la revendication 8, **caractérisé en ce que** jusqu'à 10 % des diisocyanates du composant B sont remplacés par des isocyanates supérieures.

11. Procédé selon la revendication 8, **caractérisé en ce que** les diisocyanates du composant B sont choisis parmi les diisocyanates aliphatiques, cycloaliphatiques et aromatiques ayant de 3 à 30 atomes de carbone.

12. Procédé selon la revendication 1, **caractérisé en ce que** le composant C est choisi parmi les alcools aliphatiques ayant une chaîne carbonée droite ou ramifiée ayant de 2 à 30 atomes de carbone, parmi les mono-, di- et oligoglycols une fois éthérifiés, comportant des groupes oxyalkylène ayant chacun de 2 à 4 atomes de carbone et un degré de polymérisation allant jusqu'à 20, les produits de la réaction de monoépoxydes avec des acides monocarboxyliques aliphatiques, cycloaliphatiques ou aromatiques, les esters monohydroxylés de l'acide acrylique ou méthacrylique et les allyléthers hydroxylés, et aussi parmi les monoamines aliphatiques primaires et secondaires à chaîne droite ou ramifiée ayant de 2 à 30 atomes de carbone, les monoamines polyoxyalkylénés ayant des groupes oxyalkylène possédant de 2 à 4 atomes de carbone, les alcoxyalkylamines ayant de 3 à 30 atomes de carbone, ou les mélanges de ces composés.

13. Procédé selon la revendication 1, **caractérisé en ce qu'**on utilise en tant que composant D un mélange, les pourcentages étant en masse,
D1 de 30 à 100 % d'un ou plusieurs polyvinylbutyrals, et
D2. de 0 à 70 % d'une résine plastifiante appropriée ou d'un mélange de résines plastifiantes appropriées.

14. Procédé selon la revendication 1, **caractérisé en ce que** les polyvinylbutyrals du composant D1 ont une viscosité en solution de 1 à 200 mPa.s, mesurée dans une solution méthanolique à 6 % à 23°C, un degré d'acétalisation de 65 à 90 %, une proportion en masse de groupes acétate de 2 à 5 % et une proportion en masse de groupes hydroxyle de 10 à 30 %.

15. Procédé selon la revendication 1, **caractérisé en ce qu'**on utilise en tant que résines plastifiantes des résines phénoliques, des novolaques, des phtalates de dialkyle, des résines époxydes, de l'huile de ricin et des résines alkydes, à titre individuel ou en mélange.

16. Dispersions aqueuses de polyvinylbutyral préparées par le procédé selon la revendication 1.

17. Dispersions aqueuses de polyvinylbutyral selon la revendication 16, contenant des solvants organiques selon une proportion en masse de 0,5 à 20 %.

18. Utilisation des dispersions aqueuses de polyvinylbutyral selon la revendication 16 en tant que liant pour enductions.

19. Mélanges de liants aqueux contenant des dispersions aqueuses de polyvinylbutyral selon la revendication 16.

20. Mélanges de liants aqueux contenant dès dispersions aqueuses de polyvinylbutyral selon la revendication 16 et des dispersions aqueuses de résines phénoliques.

21. Mélanges de liants aqueux contenant des dispersions aqueuses de polyvinylbutyral selon la revendication 16 et des dispersions aqueuses de résines aminoplastes.

22. Utilisation de dispersions aqueuses de polyvinylbutyral selon la revendication 16 en tant qu'apprêt promoteur d'adhérence.

23. Utilisation de dispersions aqueuses de polyvinylbutyral selon la revendication 16 en tant que résine de flexibilisation pour résines phénoliques aqueuses lors de la préparation de liants pour abrasifs.
